# EUROPÄISCHE PATENTSCHRIFT

(11) **EP 3 680 114 B1**
(45) Veröffentlichungstag und Bekanntmachung des Hinweises auf die Patenterteilung: **22.09.2021**
(21) Anmeldenummer: 19151124.5
(22) Anmeldetag: 10.01.2019
(51) Int. Cl.: B60C 19/08

(54) **FAHRZEUGLUFTREIFEN**
PNEUMATIC TYRES FOR A VEHICLE
PNEUMATIQUE DE VÉHICULE

(43) Veröffentlichungstag der Anmeldung: 15.07.2020
(73) Patentinhaber: Continental Reifen Deutschland GmbH, 30165 Hannover (DE)
(72) Erfinder: Özüduru, Ahmet, 30419 Hannover (DE); Metge, Axel, 30179 Hannover (DE); Ecke, Stefan, 30173 Hannover (DE)
(74) Vertreter: Continental Corporation

(56) Entgegenhaltungen:
- EP-A1- 2 193 939
- EP-A1- 2 910 601
- WO-A1-2018/043058
- CN-A- 107 672 388
- DE-A1-102015 225 601
- JP-A- 2009 154 608
- JP-A- 2013 163 447
- JP-A- 2013 220 763
- JP-A- 2014 172 583
- JP-A- 2015 171 848
- JP-A- 2015 217 868
- US-A1- 2017 259 626

## Beschreibung

Die Erfindung betrifft einen Fahrzeugluftreifen mit einem Laufstreifen, einer Karkasseinlage, einem Gürtelverband mit zumindest zwei Gürtellagen und einer elektrisch leitenden Gürtelbandage, welche die Gürtellagen, im Reifenquerschnitt betrachtet, randseitig überdeckt, und mit elektrisch nicht leitenden Seitenwänden, welche jeweils einen zwischen die Karkasseinlage und dem Gürtelverband hineinragenden, radial äußeren Wandabschnitt aufweisen,
wobei der Laufstreifen in radialer Richtung von zumindest einem elektrisch leitenden Element durchsetzt ist, welches mit der Gürtelbandage in elektrisch leitender Verbindung steht,
und wobei in zumindest einem Seitenwandbereich zumindest eine elektrisch leitende Seitenwandpassage ausgebildet ist, welche bei auf der Felge montiertem Reifen in elektrisch leitender Verbindung mit der Felge steht.

Fahrzeugluftreifen, welche Seitenwände mit radial äußeren Wandabschnitten aufweisen, die in den Bereich zwischen die Karkasseinlage und dem Gürtelverband hineinragen, sind als Fahrzeugluftreifen mit sogenannter "SUB-Konstruktion" bekannt, wobei SUB für "sidewall under belt" steht. Fahrzeugluftreifen mit SUB-Konstruktion haben sich im Hinblick auf die Reifenhaltbarkeit, insbesondere unter hoher Last, als vorteilhaft erwiesen. Dies liegt insbesondere daran, dass die unter den Gürtelverband reichenden Seitenwände eine "Polsterungsfunktion" übernehmen, also eine Funktion ähnlich einem Schulter- bzw. Gürtelkantenpolster aufweisen. Die SUB-Konstruktion kann insbesondere dazu beitragen, die beim Fahren auftretenden Scherspannungen im Bereich der Gürtelkanten zu reduzieren, sodass sich die mechanische Rissanfälligkeit in den Schulterbereichen vorteilhafter Weise reduzieren lässt. Ein Fahrzeugluftreifen mit einer SUB-Konstruktion ist beispielsweise aus der DE 10 2014 221 312 A1 bekannt. Die Dokumente JP2015171848, US2017259626, EP2910601, WO2018043058 und EP2193939 und CN107672388 offenbaren ebenfalls Fahrzeugreifen mit einer SUB-Konstruktion mit elektrisch nicht leitenden Seitenwänden.

Es ist ferner bekannt, Reifenbauteile, insbesondere den Laufstreifen und die Seitenwände, aus mit Silica (Kieselsäure) gefüllten Kautschukmischungen zu fertigen, um den Rollwiderstand des Reifens zu reduzieren. Silica enthaltende Kautschukmischungen verleihen den daraus gefertigten Gummibauteilen meist jedoch einen derart hohen elektrischen Widerstand, dass diese elektrisch nicht mehr leitend sind, sodass entsprechende Maßnahmen zur Ableitung der beim Fahren auftretenden elektrostatischen Aufladungen getroffen werden müssen. Die elektrische Leitfähigkeit ist auch bei Reifenbauteilen aus Kautschukmischungen zu gering, welche Ruß in sehr geringen Mengen enthalten.

Aus der JP 2013 220 763 A ist Fahrzeugluftreifen bekannt, bei welchem der Laufstreifen, die Seitenwände und die Gummierung der Karkasseinlage und der Gürtellagen elektrisch nicht leitfähig ausgeführt sind. Die Ableitung elektrostatischer Aufladungen erfolgt mittels eines den Laufstreifen in radialer Richtung durchsetzenden Streifens, einer auf dem Gürtelverband befindlichen elektrisch leitfähigen Schicht, eines stufenförmig über die Gürtelkanten verlaufenden Streifens, eines auf der Karkasseinlage aufliegenden Polsters und einer die Seitenwand entlangverlaufenden Schicht.

Bei Fahrzeugluftreifen mit SUB-Konstruktion ist es aktuell üblich, zur Ableitung der beim Fahren auftretenden elektrostatischen Aufladungen einen Gürtelverband mit elektrisch leitender Gürtelgummierung, eine Gürtelbandage mit elektrisch leitender Bandagengummierung und eine Karkasseinlage mit elektrisch leitender Karkassgummierung vorzusehen.

Gesetzliche Vorgaben machen es erforderlich, Maßnahmen aufzufinden, mit welchen sich der Rollwiderstand von Fahrzeugluftreifen weiter reduzieren lässt. Dies betrifft auch Fahrzeugluftreifen mit SUB-Konstruktion.

Der Erfindung liegt daher die Aufgabe zugrunde, bei einem Fahrzeugluftreifen der eingangs genannten Art, den Rollwiderstand weiter zu reduzieren.

Gelöst wird die gestellte Aufgabe erfindungsgemäß dadurch, dass dass die Gürtellagen elektrisch nicht leitende Gummierungen aufweisen, wobei in zumindest einer Reifenschulter zwischen dem radial äußeren Wandabschnitt der Seitenwand und dem Gürtelverband zumindest ein elektrisch leitender Gummistreifen eingebaut ist, welcher mit der elektrisch leitenden Gürtelbandage und der elektrisch leitenden Seitenwandpassage in Verbindung steht,
wobei unter einer elektrisch leitenden Passage, einem elektrisch leitenden Reifenbauteil bzw. einem elektrisch leitenden Element eine solche bzw. ein solches zu verstehen ist, welche bzw. welches einen spezifischen elektrischen Widerstand von ≤ 10⁸ Ohm · cm aufweist.

Durch die gemäß der Erfindung getroffenen Maßnahmen verläuft der "Ableitweg" außen um die Gürtelkanten, sodass die Gürtelgummierung der Gürtellagen des Gürtelverbandes vorteilhafterweise elektrisch nichtleitend sein können. Die der Gürtelgummierung zugrundeliegende Kautschukmischung braucht daher als Füllstoff keinen bzw. kaum Ruß zu enthalten, sondern einen der sich auf den Rollwiderstand des Fahrzeugluftreifens vorteilhaft auswirkenden, elektrisch nichtleitenden Füllstoffe, wie insbesondere Silica (Kieselsäure). Ein erfindungsgemäßer Reifen ist daher einerseits durch seine SUB-Konstruktion im Hinblick auf die mechanische Rissanfälligkeit in den Schulterbereichen vorteilhaft ausgeführt und weist andererseits einen gegenüber bekannten "SUB-Reifen" merklich reduzierten Rollwiderstand auf.

Eine erste bevorzugte Ausführungsvariante ist dadurch gekennzeichnet, dass in zumindest einer Reifenschulter der elektrisch leitende Gummistreifen den Reifen in Umfangsrichtung umläuft. Ein solcher umlaufender Gummistreifen lässt sich im Zuge der Reifenfertigung auf besonders einfache und rationelle Weise einbauen.

Eine zweite, alternative und ebenfalls bevorzugte Ausführungsvariante ist dadurch gekennzeichnet, dass in zumindest einer Reifenschulter eine Anzahl von über den Reifenumfang aufeinanderfolgenden, insbesondere gleichmäßig angeordneten, elektrisch leitenden Gummistreifen eingebaut ist. Diese Maßnahme trägt durch etwas geringeren Materialeinsatz zu einer weiteren Reduktion des Rollwiderstandes des Reifens bei.

Es ist ferner von Vorteil, wenn der bzw. die Gummistreifen eine konstante Dicke von 1,0 mm bis 3,0 mm aufweist bzw. aufweisen. Die zu Grunde liegenden rohen Gummistreifen lassen sich bei der Fertigung auf zuverlässige und exakte Weise am Reifenrohling auf- bzw. anbringen.

Gemäß einer bevorzugten Ausführungsvariante weist die elektrisch leitende Gürtelbandage eine elektrisch leitende Bandagengummierung auf. Auch diese Maßnahme ist fertigungstechnisch vorteilhaft.

Gemäß einer weiteren bevorzugten Ausführungsvariante weist die Karkasseinlage eine elektrisch leitende Karkassgummierung auf, welche die elektrisch leitende Seitenwandpassage mitbildet.

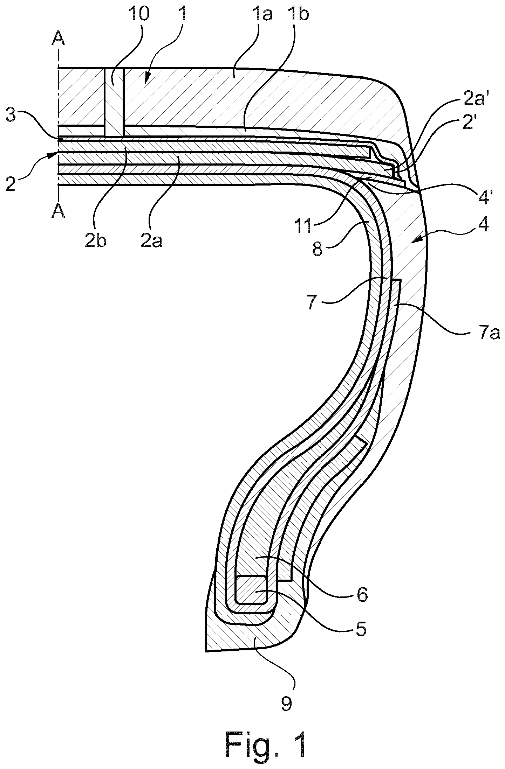

Weitere Merkmale, Vorteile und Einzelheiten der Erfindung werden nun anhand der einzigen Figur, Fig. 1, die schematisch einen Teilquerschnitt eines Fahrzeugluftreifens mit einer Ausführungsvariante der Erfindung zeigt, näher beschrieben.

Die Erfindung befasst mit einer Maßnahme zur Sicherstellung der Ableitung elektrostatischer Aufladungen bei einem Fahrzeugluftreifen, wobei gemäß der Erfindung ausgeführte Fahrzeugluftreifen insbesondere Fahrzeugluftreifen in Radialbauart für Personenkraftwagen, Vans oder Light-Trucks sind.

Im Rahmen der gegenständlichen Erfindung wird unter einem elektrisch leitenden Material, einer elektrisch leitenden Passage bzw. einem elektrisch leitenden Reifenbauteil, ein solches, eine solche bzw. ein solcher verstanden, welches, welche bzw. welcher einen spezifischen elektrischen Widerstand von ≤ 10⁸ Ohm·cm aufweist.

Fig. 1 zeigt die eine Hälfte eines Querschnittes eines Fahrzeugluftreifens, welcher ein Van- bzw. Light-Truck-Reifen ist. Die Äquatorialebene des Fahrzeugluftreifens ist durch eine Linie A-A angedeutet. Die nicht gezeigte zweite Hälfte des Fahrzeugluftreifens ist vorzugsweise übereinstimmend zur gezeigten Hälfte ausgeführt.

Von den Bauteilen des Fahrzeugluftreifens sind ein Laufstreifen 1, ein radial innerhalb des Laufstreifens 1 befindlicher, zweilagiger Gürtelverband 2, eine Gürtelbandage 3, eine der Seitenwände 4, einer der Wulstbereiche mit Wulstkern 5 und Kernreiter 6, eine Karkasseinlage 7, eine Innenschicht 8 und ein Hornprofil 9 gezeigt.

Der Laufstreifen 1 besteht beim gezeigten Ausführungsbeispiel aus einer radial äußeren Schicht 1a, welche üblicherweise als Laufstreifencap bezeichnet wird, und einer radial inneren Schicht 1b, die üblicherweise Laufstreifenbase genannt wird, wobei sowohl die radial äußere Schicht 1a als auch die radial innere Schicht 1b aus einem elektrisch nicht leitenden Gummimaterial bestehen. Der Laufstreifen 1 weist ferner eine insbesondere in bekannter Weise ausgeführte, in Fig. 1 nicht gezeigte Profilierung auf. Im Laufstreifen 1 ist zumindest ein den Laufstreifen 1 in radialer Richtung durchsetzendes, sich bis zur Laufstreifenaußenfläche erstreckendes elektrisch leitendes Element 10 integriert, wobei insbesondere ein einziges Element 10 in Form eines sogenannten Carbon-Center-Beams vorgesehen ist, der ein in Umfangsrichtung umlaufender, elektrisch leitender Gummistreifen ist. Bei mehreren elektrisch leitenden Elementen sind diese derart über den Reifenumfang verteilt, dass sich beim Abrollen des Reifens jeweils zumindest eines der Elemente in der Bodenaufstandsfläche befindet.

Die Karkasseinlage 7 verläuft in bekannter Weise zwischen dem Gürtelverband 2 und der Innenschicht 8 sowie zwischen den Seitenwänden 4 und der Innenschicht 8 und ist in den Wulstbereichen um die Wulstkerne 5 Karkasshochschläge 7a bildend umgeschlagen. Die Karkasseinlage 7 besteht beispielsweise aus einer elektrisch leitenden Karkassgummierung und in dieser insbesondere in bekannter Weise eingebetteten und ausgeführten Festigkeitsträgern, sodass die Karkasseinlage 7 elektrisch leitend ist.

Der Gürtelverband 2 besteht beim gezeigten Ausführungsbeispiel aus einer radial inneren Gürtellage 2a und einer gegenüber der Gürtellage 2a schmäler ausgeführten, radial äußeren Gürtellage 2b, welche jeweils aus in einer elektrisch nicht leitenden Gürtelgummierung eingebetteten und in jeder Gürtellage 2a, 2b parallel zueinander verlaufenden Festigkeitsträgern, beispielsweise aus Stahl- oder Textilkorden bekannter Konstruktion, bestehen, wobei die Festigkeitsträger der Gürtellage 2a jene der Gürtellage 2b insbesondere in bekannter Weise kreuzen. Ferner weist zumindest die radial innere Gürtellage 2a, im Querschnitt betrachtet, die Karkasseinlage 7 seitlich überragende und diese daher nicht kontaktierende Randabschnitte 2a' auf, unterhalb welcher die jeweilige Seitenwand 4 hineinragt, sodass jede Seitenwand 4 einen zwischen der radial inneren Gürtellage 2a und der Karkasseinlage 7 auslaufenden radial äußeren Wandabschnitt 4' aufweist. Ein Fahrzeugluftreifen, dessen Seitenwände 4 solche Wandabschnitte 4' aufweisen, wird als Fahrzeugluftreifen mit "SUB-Konstruktion" bezeichnet, wobei SUB für "sidewall under belt" steht. Die Seitenwände 4 sind aus elektrisch nicht leitendem Gummimaterial gefertigt.

Die Gürtelbandage 3 bedeckt die Gürtellagen 2a, 2b, grenzt daher an die radial innere Schicht 1b des Laufstreifens 1 an und steht in Kontakt mit dem zumindest einem elektrisch leitenden Element 10. Die Gürtelbandage 3 verläuft über die Gürtelkanten 2' der beiden Gürtellagen 2a, 2b hinaus, ist beim gezeigten Ausführungsbeispiel als einlagige Spulbandage ausgeführt und besteht aus in eine elektrisch leitende Bandagengummierung eingebetteten, im Allgemeinen textilen, vorzugsweise aus Nylon gefertigten, Festigkeitsträgern. Die Gürtelbandage 3 ist daher elektrisch leitend.

In zumindest einer Reifenschulter ist zwischen dem radial äußeren Wandabschnitt 4' der Seitenwand 4 und dem Randabschnitt 2a' der radial inneren Gürtellage 2a zumindest ein elektrisch leitender Gummistreifen 11 positioniert. Jeder Gummistreifen 11 weist eine Dicke von 1,0 mm bis 3,0 mm auf, erstreckt sich über den jeweiligen Randabschnitt 2a' der radial inneren Gürtellage 2a, kontaktiert das freie Ende der Gürtelbandage 3 im Bereich der jeweiligen Gürtelkante 2' der radial inneren Gürtellage 2a und kontaktiert ferner auch die Karkasseinlage 7. Dabei kann der elektrisch leitende Gummistreifen 11 ein in Umfangsrichtung umlaufender Gummistreifen sein. Alternativ können mehrere über den Reifenumfang verteilte angeordnete und daher entsprechend zueinander beabstandete, elektrisch leitende Gummistreifen vorgesehen sein. Der bzw. die Gummistreifen können bei der Fertigung des Reifens mit den "rohen", unvulkanisierten Seitenwänden koextrudiert oder separat extrudiert werden.

Beim beschriebenen Ausführungsbeispiel erfolgt die Ableitung elektrostatischer Aufladungen beim Fahren ausgehend vom Fahrzeug, insbesondere der Karosserie, zum jeweiligen Untergrund ("Erdung") über einen "Ableitweg", welcher von der Felge, dem Hornprofil 9, der Karaksseinlage 7, dem Gummistreifen 11, der Gürtelbandage 3 und dem elektrisch leitenden Element 10 gebildet ist.

Die Erfindung ist auf das beschriebene Ausführungsbeispiel nicht beschränkt.

Beim beschriebenen Ausführungsbeispiel bildet die elektrisch leitende Gürtelbandage 3, aufgrund ihrer elektrisch leitenden Bandagengummierung, eine elektrisch leitende Passage zwischen dem Gummistreifen 11 und dem bzw. den elektrisch leitenden Element(en) 10. Anstelle einer elektrisch leitenden Bandagengummierung kann die Gürtelbandage 3 insbesondere mit einer Anzahl von in geeigneter Weise angebrachten elektrisch leitenden Fäden versehen sein, welche die elektrisch leitende Passage zwischen dem Gummistreifen 11 und dem bzw. den elektrisch leitenden Element(en) 10 bilden. Bei einer als Spulbandage ausgeführten Gürtelbandage verlaufen die elektrisch leitenden Fäden vorzugsweise gemäß der DE 10 2015 225 601 A1, sodass die Fäden auf der Innenseite des bzw. eines Bandagestreifens verlaufende Fadenabschnitte, auf der Außenseite des bzw. eines Bandagestreifens verlaufende Fadenabschnitte und zwischen benachbarten Windungen verlaufende, die Gürtelbandage in radialer Richtung durchsetzende Fadenabschnitte aufweisen. Der bzw. die Bandagestreifen kann bzw. können insbesondere auch mit den Fäden umwickelt sein.

Ferner bildet beim beschriebenen Ausführungsbeispiel die elektrisch leitende Karkasseinlage 7, bedingt durch die elektrisch leitende Karkassgummierung, im Bereich jeder Seitenwand 4 eine elektrisch leitende Seitenwandpassage, welche das Hornprofil 9 mit dem Gummistreifen 11 elektrisch leitend verbindet. Anstelle einer elektrisch leitenden Karkassgummierung können im Bereich der Seitenwand insbesondere ebenfalls elektrisch leitende Fäden vorgesehen sein, welche auf der Karkasseinlage und/oder auf der Innenseite der Seitenwand und des Hornprofiles aufgebracht sind, wie es beispielsweise aus der DE 10 2010 017 444 A1 bzw. der WO 2017/088994 A1 bekannt ist. Die elektrisch leitende Seitenwandpassage kann ferner von einer im Zuge der Reifenfertigung aufgebrachten elektrisch leitenden Suspension gebildet sein, wie sie etwa aus der EP 3 103 661 B1 bekannt ist.

Anstelle eines elektrisch leitenden Hornprofils ist es beispielsweise möglich, an der Außenseite eines nicht leitenden Hornprofiles elektrisch leitendes Material vorzusehen, welches in radialer Richtung über das Hornprofil hinausverläuft und die elektrisch leitende Karkasseinlage bzw. die elektrisch leitende Seitenwandpassage kontaktiert, so wie es beispielsweise aus der DE 10 2015 255 150 A1 bekannt ist. Das elektrisch leitende Material ist dabei insbesondere ein Gummistreifen, ein Gewebe, ein Faden, eine aufgebrachte elektrisch leitende Paste bzw. eine leitende Suspension oder ein aufgebrachtes elektrisch leitendes Pulver oder Granulat.

Es ist daher möglich, das Gummimaterial des Laufstreifens, die Bandagengummierung, die Gürtelgummierung, die Karkassgummierung, das Gummimaterial der Seitenwand und des Hornprofils elektrisch nicht leitend auszuführen. Die diesen Gummimaterialien zugrundeliegenden Kautschukmischungen können daher vorteilhafterweise einen hohen Anteil an Silica als Füllstoff weisen, wodurch der Rollwiderstand des Reifens deutlich gesenkt wird.

### Bezugsziffernliste

- 1: Laufstreifen
- 1a: radial äußere Schicht
- 1b: radial innere Schicht
- 2: Gürtelverband
- 2': Gürtelkante
- 2a, 2b: Gürtellage
- 2a': Randabschnitt
- 3: Gürtelbandage
- 4: Seitenwand
- 4': radial äußerer Wandabschnitt
- 5: Wulstkern
- 6: Kernreiter
- 7: Karkasseinlage
- 7a: Karkasshochschlag
- 8: Innenschicht
- 9: Hornprofil
- 10: elektrisch leitendes Element
- 11: Gummistreifen
- A-A: Linie (Äquatorialebene)

## Patentansprüche

1. Fahrzeugluftreifen mit einem Laufstreifen (1), einer Karkasseinlage (7), einem Gürtelverband (2) mit zumindest zwei Gürtellagen (2a, 2b) und einer elektrisch leitenden Gürtelbandage (3), welche die Gürtellagen (2a, 2b), im Reifenquerschnitt betrachtet, randseitig überdeckt und mit elektrisch nicht leitenden Seitenwänden (4), welche jeweils einen zwischen die Karkasseinlage (7) und der radial innersten Gürtellage (2a) hineinragenden, radial äußeren Wandabschnitt (4') aufweisen,
wobei der Laufstreifen (1) in radialer Richtung von zumindest einem elektrisch leitenden Element (10) durchsetzt ist, welches mit der Gürtelbandage (3) in elektrisch leitender Verbindung steht,
und wobei in zumindest einem Seitenwandbereich zumindest eine elektrisch leitende Seitenwandpassage ausgebildet ist, welche bei auf der Felge montiertem Reifen in elektrisch leitender Verbindung mit der Felge steht, **dadurch gekennzeichnet,**
**dass** die Gürtellagen (2a, 2b) elektrisch nicht leitende Gummierungen aufweisen, wobei in zumindest einer Reifenschulter zwischen dem radial äußeren Wandabschnitt (4') der Seitenwand (4) und der radial innersten Gürtellage (2a) zumindest ein elektrisch leitender Gummistreifen (11) eingebaut ist, welcher mit der elektrisch leitenden Gürtelbandage (3) und der elektrisch leitenden Seitenwandpassage in Verbindung steht,
wobei unter einer elektrisch leitenden Passage, einem elektrisch leitenden Reifenbauteil bzw. einem elektrisch leitenden Element eine solche bzw. ein solches zu verstehen ist, welche bzw. welches einen spezifischen elektrischen Widerstand von ≤ 10⁸ Ohm · cm aufweist.

2. Fahrzeugluftreifen nach Anspruch 1, **dadurch gekennzeichnet, dass** in zumindest einer Reifenschulter der elektrisch leitende Gummistreifen (11) den Reifen in Umfangsrichtung umläuft.

3. Fahrzeugluftreifen nach Anspruch 1, **dadurch gekennzeichnet, dass** in zumindest einer Reifenschulter eine Anzahl von über den Reifenumfang aufeinanderfolgenden, insbesondere gleichmäßig angeordneten, elektrisch leitenden Gummistreifen eingebaut ist.

4. Fahrzeugluftreifen nach einem der Ansprüche 1 bis 3, **dadurch gekennzeichnet, dass** der bzw. die Gummistreifen (11) eine konstante Dicke von 1,0 mm bis 3,0 mm aufweist bzw. aufweisen.

5. Fahrzeugluftreifen nach einem der Ansprüche 1 bis 4, **dadurch gekennzeichnet, dass** die elektrisch leitende Gürtelbandage (3) eine elektrisch leitende Bandagengummierung aufweist.

6. Fahrzeugluftreifen nach einem der Ansprüche 1 bis 5, **dadurch gekennzeichnet, dass** die Karkasseinlage (7) eine elektrisch leitende Karkassgummierung aufweist, welche die elektrisch leitende Seitenwandpassage mitbildet.

## Claims

1. Pneumatic vehicle tyre comprising a tread (1), a carcass inlay (7), a belt assembly (2) with at least two belt plies (2a, 2b) and an electrically conducting belt bandage (3), which covers the belt plies (2a, 2b) at the edges, as seen in the cross section of the tyre, and with electrically non-conducting sidewalls (4), which each have a radially outer wall section (4'), which protrudes between the carcass inlay (7) and the radially innermost belt ply (2a),
wherein at least one electrically conducting element (10) passes through the tread (1) in the radial direction and is in electrically conducting connection with the belt bandage (3), and wherein at least one electrically conducting sidewall passage is formed in at least one side wall region and is in electrically conducting connection with the wheel rim when the tyre is fitted on the rim,
**characterized**
**in that** the belt plies (2a, 2b) have electrically non-conducting rubber linings, wherein at least one electrically conducting rubber strip (11) is incorporated in at least one shoulder of the tyre between the radially outer wall section (4') of the sidewall (4) and the radially innermost belt ply (2a) and is in connection with the electrically conducting belt bandage (3) and the electrically conducting sidewall passage,
wherein an electrically conducting passage, an electrically conducting tyre component and an electrically conducting element mean one which has an electrical resistivity of ≤ 10⁸ ohm · cm.

2. Pneumatic vehicle tyre wall according to Claim 1, **characterized in that**, in at least one shoulder of the tyre, the electrically conducting rubber strip (11) runs around the tyre in the circumferential direction.

3. Pneumatic vehicle tyre according to Claim 1, **characterized in that**, in at least one shoulder of the tyre, a number of electrically conducting rubber strips are incorporated, following one another over the circumference of the tyre and in particular arranged uniformly.

4. Pneumatic vehicle tyre to one of Claims 1 to 3, **characterized in that** the rubber strip or strips (11) has or have a constant thickness of 1.0 mm to 3.0 mm.

5. Pneumatic vehicle tyre according to one of Claims 1 to 4, **characterized in that** the electrically conducting belt bandage (3) has an electrically conducting rubber bandage lining.

6. Pneumatic vehicle tyre according to one of Claims 1 to 5, **characterized in that** the carcass inlay (7) has an electrically conducting rubber carcass lining, which plays a part in forming the electrically conducting sidewall passage.

## Revendications

1. Pneumatique de véhicule comprenant une bande de roulement (1), un insert de carcasse (7), une armature de ceinture (2) comprenant au moins deux nappes de ceinture (2a, 2b) et une bande de ceinture électriquement conductrice (3), qui recouvre les nappes de ceinture (2a, 2b) sur le bord lorsque le pneumatique est vu en coupe transversale, et des parois latérales électriquement non conductrices (4) qui comportent chacune une portion de paroi radialement extérieure (4') qui fait saillie entre l'insert de carcasse (7) et la nappe de ceinture la plus intérieure (2a),
la bande de roulement (1) étant traversée dans la direction radiale par au moins un élément électriquement conducteur (10) qui est relié électriquement à la bande de ceinture (3), et au moins un passage de paroi latérale électriquement conducteur étant formé dans au moins une zone de paroi latérale, lequel est relié électriquement à la jante lorsque le pneumatique est monté sur la jante, **caractérisé en ce que**
les nappes de ceinture (2a, 2b) comportent des revêtements en caoutchouc électriquement non conducteurs, au moins une bande de caoutchouc électriquement conductrice (11) étant incorporée dans au moins un épaulement de pneumatique entre la portion de paroi radialement extérieure (4') de la paroi latérale (4) et la nappe de ceinture radialement la plus intérieure (2a), laquelle bande de caoutchouc est reliée à la bande de ceinture électriquement conductrice (3) et au passage de paroi latérale électriquement conducteur, passage électriquement conducteur, composant de pneumatique électriquement conducteur ou élément électriquement conducteur devant être compris comme signifiant ce qui présente une résistance électrique spécifique ≤ 10⁸ ohm·cm.

2. Pneumatique de véhicule selon la revendication 1, **caractérisé en ce que** la bande de caoutchouc électriquement conductrice (11) fait le tour du pneumatique dans la direction circonférentielle dans au moins un épaulement de pneumatique.

3. Pneumatique de véhicule selon la revendication 1, **caractérisé en ce qu'**un certain nombre de bandes de caoutchouc électriquement conductrices qui se suivent sur la circonférence du pneumatique, en particulier qui sont disposées de manière régulière, sont incorporées dans au moins un épaulement de pneumatique.

4. Pneumatique de véhicule selon l'une des revendications 1 à 3, **caractérisé en ce que** la ou les bandes de caoutchouc (11) ont une épaisseur constante de 1,0 mm à 3, 0 mm.

5. Pneumatique de véhicule selon l'une des revendications 1 à 4, **caractérisé en ce que** la bande de ceinture électriquement conductrice (3) comporte un revêtement en caoutchouc électriquement conducteur.

6. Pneumatique de véhicule selon l'une des revendications 1 à 5, **caractérisé en ce que** l'insert de carcasse (7) comporte un revêtement en caoutchouc électriquement conducteur qui contribue à former le passage de paroi latérale électriquement conducteur.
